## Europäisches Patentamt

## European Patent Office

## Office européen des brevets

(11) Publication number: **0 097 041**
**B1**

(12) EUROPEAN PATENT SPECIFICATION

(45) Date of publication of patent specification: **26.04.89**

(51) Int. Cl.⁴: **G 01 P 5/18**, G 01 F 1/704

(21) Application number: **83303370.7**

(22) Date of filing: **10.06.83**

(54) **Correlation of noise signals.**

(30) Priority: **11.06.82 US 387642**

(43) Date of publication of application:
**28.12.83 Bulletin 83/52**

(45) Publication of the grant of the patent:
**26.04.89 Bulletin 89/17**

(84) Designated Contracting States:
**DE FR GB IT**

(56) References cited:
**WO-A-81/03708**
**DE-A-2 018 618**
**US-A-3 940 731**
**US-A-4 019 038**
**US-A-4 317 077**

**SCIENTIFIC INSTRUMENTS, vol. 14, no. 1,
January 1981, pages 7-19, The Institute of
Physics, Dorking, GB; M.S. BECK: "Correlation
in instruments: cross correlation flowmeters"**

(73) Proprietor: **THE BABCOCK & WILCOX
COMPANY**
**1010 Common Street P.O. Box 60035**
**New Orleans Louisiana 70160 (US)**

(72) Inventor: **Thompson, William Lee**
**15364 GAR Highway**
**Chardon Ohio 44024 (US)**

(74) Representative: **Cotter, Ivan John et al**
**D. YOUNG & CO. 10 Staple Inn**
**London WC1V 7RD (GB)**

(56) References cited:
**IDEM**
**ISA TRANSACTIONS, vol. 20, no. 2, 1981, pages
11-14, ISA, Research Triangle Park, N.C., US; H.
NORD: "A new solution to an old flow
measuring problem"**

Courier Press, Leamington Spa, England.

EP 0 097 041 B1

**Description**

This invention relates to correlators for and to methods for establishing correlation of two noise signals and can for example be applied to flowmeters, for instance to establish maximum correlation between delayed and undelayed signals supplied from two spaced apart sensors which sense noise signals coming from a fluid flow.

The use of correlation techniques for establishing fluid flow and other operator parameters is disclosed in U.S. Patent No. US—A—4 019 038 to Critten et al. According to the disclosure af that patent, an ultrasonic signal is passed through a flow of fluid at two spaced locations along the flow direction. The amount of correlation between these two signals, where one signal is delayed with respect to the other in appropriate circuitry, is determined, and is used as a measure of the time required by the fluid to traverse the distance between two sensors.

In addition to the additional requirements of providing an ultrasonic signal at the site of each sensor, the circuitry described in U.S. Patent No. US—A—4 019 038 is quite complex.

General purpose signal correlators such as the so-called CAICOR instrument have been used for extracting flow signals using correlation techniques. These are laboratory instruments, however, and are quite expensive. They must be shared between several flowmeters in a large installation for their use to be economically feasible.

In U.S. Patent No. US—A—4 317 077 to Zwarts, from which the preambles of present Claims 1 and 13 have been derived, there is disclosed a velocity or displacement measurement technique in which the detection signals from spaced-apart transducers along the path of a moving medium are converted into polarity-indicative signals which are cross-correlated to provide a correlation signal. The correlation signal is integrated and the integrated signal applied to a voltage controlled oscillator, whose output frequency is used to control a variable delay line in the signal path from one of the transducers.

WO 81/03708 discloses a method of and an apparatus for determining the speed between two bodies. This speed determination uses a microprocessor carrying out correlation actions on the basis of data sweeps and peak locations.

According to the invention there is provided a correlator for establishing correlation of two noise signals having positive and negative polarity components, the correlator comprising:

an input polarity comparator for each noise signal for generating for each signal a pulse wave having a high level upon the occurrence of one of the positive and negative polarity components and a low level upon the occurrence of the other of the positive and negative polarity components;

variable delay means connected for receiving one of the pulse waves and delaying that one of the pulse waves by a variable delay amount;

wave correlation means for receiving the other of the pulse waves and the delayed one of the pulse waves and generating a correlation signal which is high with high correlation between the delayed pulse wave and the other pulse wave and low with low correlation thereof;

control means connected to the variable delay means for varying the delay amount in response to the correlation signal; and

scaling means connected to the control means for receiving the particular delay amount and generating a readable signal therefrom;

characterised in that:

the control means comprises sweep means for varying the delay amount in a selected one of increasing and decreasing directions in a predetermined manner, and peak lock means connected to the sweep means and to the wave correlation means for determining whether the correlation signal is increasing or decreasing and, with a decreasing correlation signal, for controlling the sweep means to change the direction of variation of the delay amount so that a particular delay amount corresponding to a maximum correlation signal is obtained, whereas, with an increasing correlation signal, the sweep means continues to vary the delay amount in the predetermined manner unaffected by the peak lock means.

The invention also provides a method of correlating two noise signals each having positive and negative polarity components, the method comprising:

generating a square wave having a high level upon the occurrence of each positive polarity component for each of the two noise signals;

variably delaying one of the square waves with respect to the other;

comparing the delayed and undelayed square waves for determining correlation thereof;

generating a correlation signal which is high with high correlation of the delayed and undelayed square waves and low with low correlation of the delayed and undelayed signals;

varying a time delay amount by which the one square wave is delayed in response to the correlation signal; and

determining a particular delay amount corresponding to a maximum correlation signal, which particular delay amount corresponds to correlation between the two noise signals; characterised by:

sweeping the time delay amount in a selected one of increasing and decreasing directions in a predetermined manner; and

detecting decreases in the correlation signal and, upon the occurrence of a decrease in the correlation signal, changing the sweep direction of the variation of the time delay amount so as to increase the correlation signal, whereas, with an increase in the correlation signal, the time delay sweep continues in the selected direction in the predetermined manner.

A preferred embodiment of the present invention described hereinbelow is designed for flowmeter applications and may be implemented in a form inexpensive enough for individual flowmeter applications. Many of the features available with the more expensive unit are unnecessary in a flowmeter application and therefore are not included in the preferred embodiment. The preferred embodiment determines the maximum of a correlation function and locks on to it, rather than calculating the entire function and displaying it.

While the preferred embodiment disclosed below is primarily drawn to a flowmeter application, it is to be noted that this invention is equally applicable to all time-dependent variable applications such as auto or cross correlation, and not just to the measurement of flow.

In the below-described preferred embodiment of the invention, the natural noise occurring in a fluid flow or other phenomenon to be measured is utilised as a noise signal. Such noise signals may, for example, be an electrostatic charge pattern in a flow of pulverised coal or a signal received from a combination light source-photocell sensor which generates a signal corresponding to variations in the reflection of light against a flow of pulp for the manufacture of paper.

The preferred correlator disclosed hereinbelow is sufficiently simple and inexpensive to be dedicated to a single flowmeter or other measuring device, simple in design, rugged in construction and economical to manufacture.

The invention will now be further described, by way of illustrative and non-limiting example, with reference to the accompanying drawings, in which:

Figure 1 is a schematic representation of a dedicated correlator constituting a preferred embodiment of the invention, used as a flowmeter;

Figure 2 is a block diagram of the dedicated correlator; and

Figures 3A to 3E are schematic circuit diagrams of various components of the dedicated correlator as shown in Figure 2.

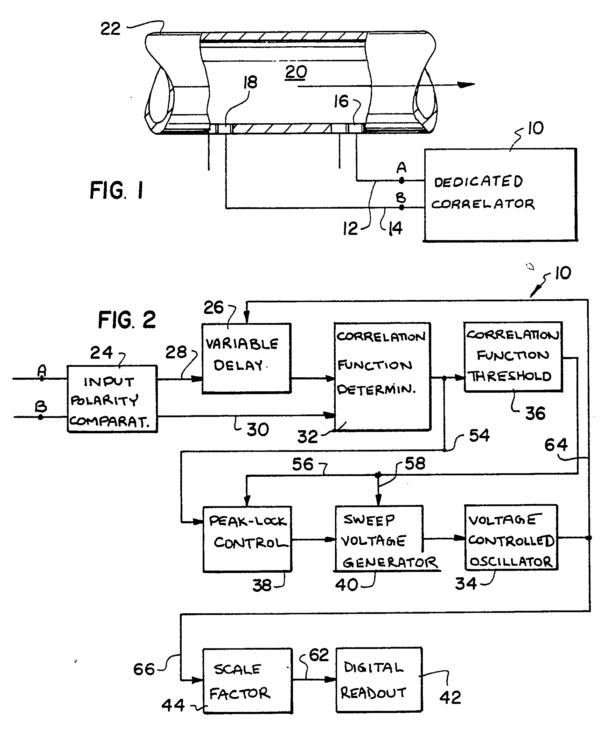

Figure 1 of the drawings shows a dedicated correlator 10 which receives two signals A, B over lines 12 and 14 from spaced-apart sensors 16, 18. The sensors 16, 18 sense noise generated by a flow of fluid 20 within a conduit 22. The sensors 16 and 18 may, for example, be of a type capable of sensing electrostatic charge patterns in the flowing fluid 20. This is particularly useful when the flowing fluid 20 is pulverised coal. When the flow is of pulp, in the manufacture of paper, for example, the sensors 16, 18 may include a source of light in combination with a photodetector. The signals produced by the two photodetectors vary with the varying amount of light reflected from the pulp flow.

As shown in Figure 2, the correlator 10 includes an input polarity comparator 24 that receives the input noise signals A and B from the sensors 16 and 18. Each of the input noise signals A, B includes positive and negative polarity components. The input polarity comparator 24 converts the input noise signals A, B into pulse or square waves which correspond to the polarity of the two noise signals. The comparator 24 operates on each input noise signal A, B to give a high level when the input is above zero (or of positive polarity) or a low level when the input is below zero (or of negative polarity). In this way, two pulse waves are generated, one for each input noise signal, with only the polarity of the signal being utilised and the amplitude being ignored.

The pulse wave derived from the noise signal A is applied to a variable delay means or circuit 26 over a line 28 and thence to a correlation function determination unit 32, and the pulse wave derived from the noise signal B is applied over a line 30 directly in the correlation function determination unit 32.

The variable delay means 26 functions to delay the pulse wave derived from the noise signal A by a variable but determined amount. The variable delay means 26 includes a 256-bit digital shift register which is used to provide 256 units of delay for the signal entering the variable delay means 26. A clocking function for the shift register is varied by an VCO (voltage controlled oscillator) 34 connected to the variable delay means 26.

In the correlation function determination unit 32, the delay which is determined by the shift register and clock in the variable delay means 26 is determined by averaging the time that the two signals are of like polarity. This is effected by the use of an exclusive-OR gate. The exclusive-OR gate receives the delayed and undelayed pulse waves and generates a high output signal when the two waves are equal and a low signal when they are unequal. An inverter connected to the exclusive-OR gate inverts the exclusive-OR gate output which is filtered by an RC filter that averages the instances of "equal" and "not equal" determinations. A correlation signal for every particular delay amount is therefore established.

To eliminate the problem of low level correlation which may occur due to characteristics of the noise signals themselves, a correlation function threshold is provided in a correlation function threshold circuit or unit 36 to eliminate false readings.

A peak lock control means or circuit 38 is provided to lock in on the maximum correlation signal. The peak lock control means 38 is controlled by the correlation function threshold circuit 36 to ignore low level correlation. The peak lock control means 38 functions to control the operation of a sweep voltage generator 40 as will be described in greater detail hereinbelow.

The sweep voltage generator 40 generates a slow sawtooth voltage to control the frequency of the clock in the shift register of the variable delay means 26 via the voltage controlled oscillator 34. This effects a search for the correlation signal peak when the circuit is not locked by the peak lock control means 38. When the peak lock control means 38 locates a correlation signal peak, the direction of variation of the sawtooth waveform of the sweep voltage generator 40 is reversed to sweep back over the correlation signal peak. The rate of the sawtooth wave has two values, slow and fast. The slow value is used in tracking the main peak (when the peak is locked in) and the fast value is used to find the main peak quickly (to get over the correlation function threshold). The slow/fast feature is controlled by the correlation function threshold circuit 36.

The peak lock control means 38 determines when the correlation or correlation function determination unit 32 is moving away from the peak. That is, when the correlation signal begins to decrease, this indicates a movement away from the correlation signal peak. Upon this occurrence, the peak lock control means 38 issues a command to the sweep voltage generator 40 to change the direction of the sweep. This reverses the direction of change of the delay amount and moves it back over the particular delay amount which corresponds to the correlation signal peak. The circuit is then in a locked state and travels back and forth over the correlation signal peak.

In greater detail, the peak lock control means 38 samples the correlation signal amplitude and stores this information. A short time later the correlation signal is again sampled. The new sample and the stored sample are compared. If they are within a particular voltage, they are judged to be "equal". In this case, the second sampler is activated again. This continues until the second sample is either higher or lower than the original stored value. If the value of the latest sample is higher than the stored value, the cycle begins again with an updated stored value and later samples for comparison with it. If, however, the value of the latest sample is lower than the stored value, a judgement is made that the circuit is moving away from the correlation signal peak and a change-direction command is issued to the sweep voltage generator 40. The same command causes a digital readout 42 to be updated.

The peak lock control means 38 is inoperative when the correlation function threshold criterion, as set by the circuit 36, is not satisfied.

The voltage controlled oscillator 34 includes an integrated circuit function generator and provides a swept frequency as a clock signal for the variable delay means 26. The frequency of the oscillator 34 is controlled by the output of the sweep voltage generator 40.

A scaler factor or scaling means or circuit 44 is provided between the output of the voltage controlled oscillator 34, which provides a signal corresponding to the particular delay amount, and the digital readout 42. The scale factor means 44 operates as follows:

The delay D provided by the shift register in the variable delay means 26 is:

$$D = \frac{N}{f_c} \qquad (1)$$

where N equals the number of stages in the register and $f_c$ is the frequency of the clock. The delay is related to the flow velocity V by:

$$D = \frac{X}{V} \qquad (2)$$

where X is the separation of the sensors 16, 18 in the direction of flow. Combining these two expressions gives:

$$f_c = \frac{N}{X} \cdot V \qquad (3)$$

Thus, the flow velocity is directly related to the clock frequency. Counting the clock frequency, divided by an appropriate constant K as described below, gives an output number equal to the velocity in desired engineering units.

The digital readout 42 contains a counter which counts for 1/2 second. This means that the number so determined equals 1/2 of the frequency of the signal at the input to the digital readout 42. In other words:

$$\text{Output number} = \frac{f_c}{2} \qquad (4)$$

Combining Equations (3) and (4) gives:

$$\text{Output number} = \frac{NV}{2X} \qquad (5)$$

Since N=256 in the present example:

$$\text{Output number} = \frac{256V}{2X} \qquad (6)$$

Getting the output to equal V requires dividing by the constant K to get the required calibration, giving:

$$\text{New output number} = \frac{\text{Output number}}{K} = \frac{256V}{2XK}$$

Equality requires that the factor

$$\frac{256}{2XK} \qquad (7)$$

be unity in magnitude to supply the required units of velocity. Thus:

$$K = \frac{256}{2X} \qquad (8)$$

Putting in units of length for X gives the same unit for velocity (feet, metres, etc).

The digital readout 42 counts the frequency at its input (the output of the scale factor means 44), and displays it to the user.

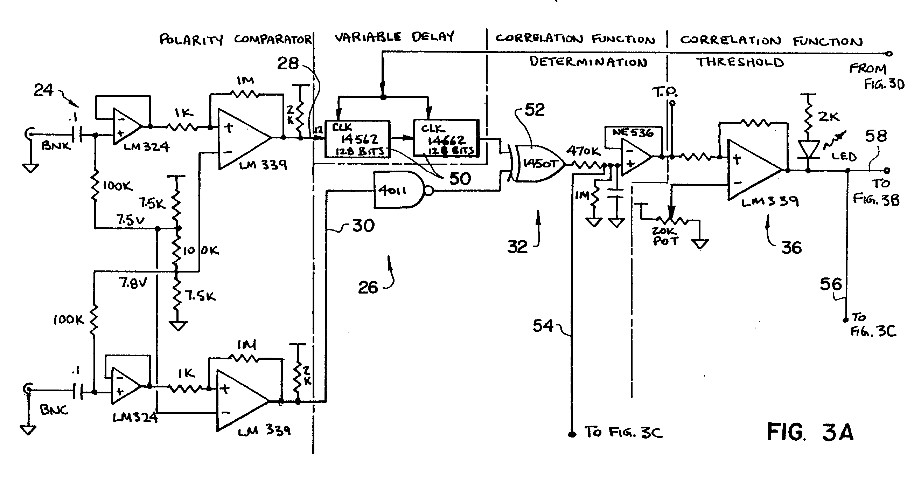

Details of preferred implementations of the circuit blocks shown in Figure 2 are shown in Figures 3A to 3E.

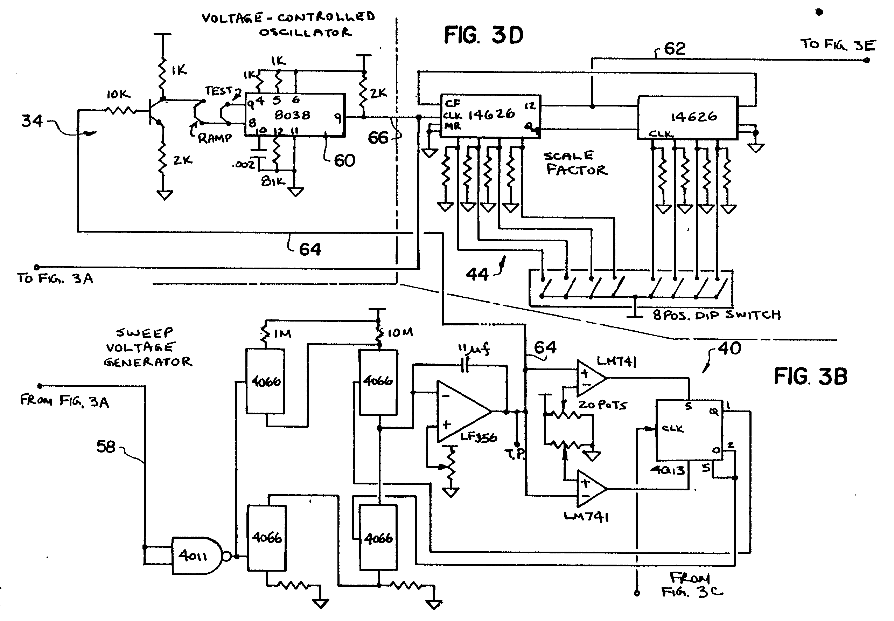

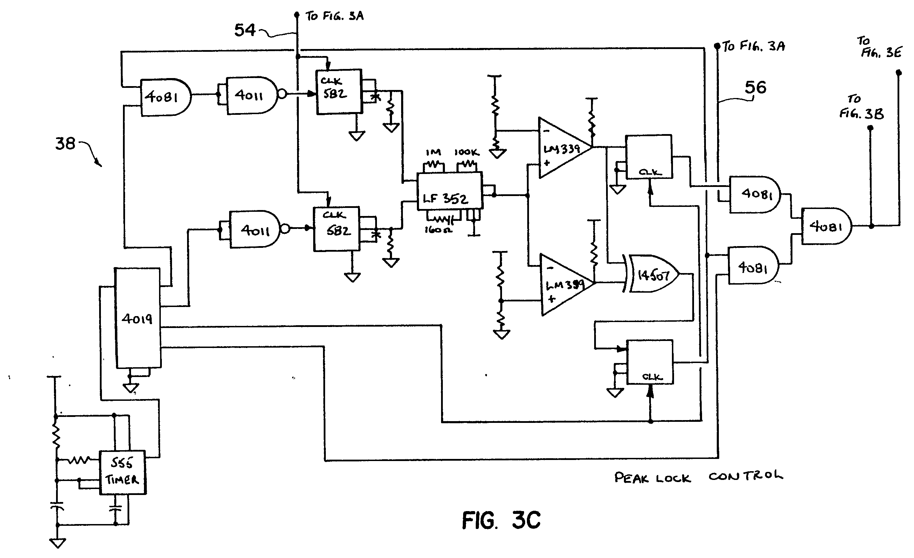

Figure 3A shows the circuitry for the input polarity comparator 24, the variable delay means 26, the correlation function determination unit 32 and the correlation function threshold circuit 36. The pulse waves derived from the input noise signals A and B are provided over lines 28 and 30, respectively. The pulse wave on the line 28 is delayed by an amount determined in clocking registers 50. The delayed and undelayed signals are provided to an exclusive-OR gate 52 in the correlation function determination unit 32, averaged by following filter and averaging circuitry and provided over a line 54 to the peak lock control means 38, which is shown in Figure 3C. The correlation signal is also applied to the correlation function threshold circuit 36, which is connected via a line 56 to the peak lock control means 38. The signal of the correlation function threshold circuit 36 is applied over a line 58, after inversion, to the sweep voltage generator 40, which is shown in Figure 3B.

The slow/fast swept sawtooth is generated by the circuitry shown in Figure 3B, which shows a preferred implementation of the sweep voltage generator 40.

As mentioned above, Figure 3C shows the peak lock control means 38.

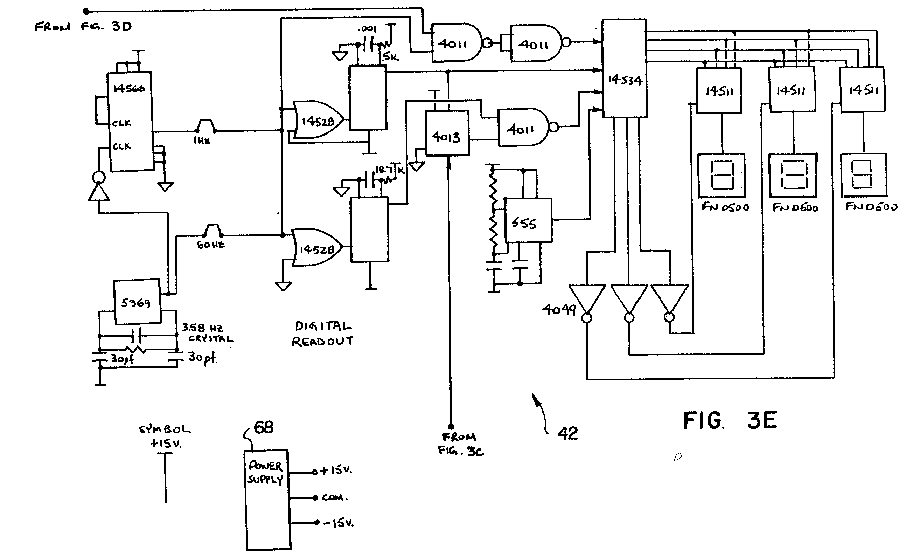

Figures 3B and 3D show the voltage controlled oscillator 34 having a register 60, and the scale factor means 44 that is connected over a line 62 to the digital readout 42, which is shown in Figure 3E. The oscillator 34 is connected via a line 64 to the variable delay means 26 and via a line 66 to the scale factor means 44.

The digital readout 42 is shown in Figure 3E, which also illustrates a power supply 68 and a symbol utilized for a plug 15-volt tap in circuitry of Figures 3A to 3E.

## Claims

1. A correlator for establishing correlation of two noise signals having positive and negative polarity components, the correlator (10) comprising:

an input polarity comparator (24) for each noise signal (A, B) for generating for each signal a pulse wave having a high level upon the occurrence of one of the positive and negative polarity components and a low level upon the occurrence of the other of the positive and negative polarity components;

variable delay means (26) connected to receiving one of the pulse waves and delaying that one of the pulse waves by a variable delay amount;

wave correlation means (32) for receiving the other of the pulse waves and the delayed one of the pulse waves and generating a correlation signal which is high with high correlation between the delayed pulse wave and the other pulse wave and low with low correlation thereof;

control meas (38, 40, 34) connected to the variable delay means (26) for varying the delay amount in response to the correlation signal; and

scaling means (44) connected to the control means (38, 40, 34) for receiving the particular delay amount and generating a readable signal therefrom; characterised in that:

the control means (38, 40, 34) comprises sweep means (40, 34) for varying the delay amount in a selected one of increasing and decreasing directions in a predetermined manner, and peak lock means (38) connected to the sweep means (40, 34) and to the wave correlation means (32) and determining whether the correlation signal is increasing or decreasing and, with a decreasing correlation signal, for controlling the sweep means to change the direction of variation of the delay amount so that a particular delay amount corresponding to a maximum correlation signal is obtained, whereas, with an increasing correlation signal, the sweep means continues to vary the delay amount in the predetermined manner unaffected by the peak lock means (38).

2. A correlator according to Claim 1, wherein the sweep means (40, 34) comprises a sweep voltage generator (40) for generating a sawtooth wave with increasing and decreasing sides and a voltage controlled oscillator (34) connected to the sweep voltage generator (40) for increasing and decreasing a frequency according to the sawtooth wave sides, the voltage controlled oscillator (34) being connected to the variable delay means (26) for varying the delay amount according to variations in the frequency of the voltage controlled oscillator.

3. A correlator according to Claim 2, wherein the variable delay means (26) comprises a shift register (50) having a plurality of positions corresponding to a number of delay amounts, the voltage controlled oscillator (34) being connected to the shift register (50) for changing the position thereof according to changes in the frequency of the voltage controlled oscillator (34).

4. A correlator according to Claim 1, Claim 2 or Claim 3, wherein the sweep means (40, 34) has two speeds, namely a fast speed for fast increasing and decreasing variations in the delay amount before a maximum correlation signal is determined by the peak lock means (38), and a slow speed after the peak lock means (38) has determined the maximum correlation signal.

5. A correlator according to any one of the preceding claims, including first and second sensors (16, 18) that are spaced apart or capable of being spaced apart along a flow path of a fluid for generating the two noise signals (A, B).

6. A correlator according to Claim 5, wherein the sensors (16, 18) comprise electrostatic charge pattern sensors for sensing variations in electrostatic charge in the flow.

7. A correlator according to Claim 5, wherein the sensors (16, 18) comprise a photodetector and a light source for reflecting light off the flow and to the photodetector for generating each of the two noise signals.

8. A correlator according to Claim 5, Claim 6 or Claim 7, wherein the scaling means (44) comprises a circuit for converting the particular delay amount to a velocity amount representing the velocity of flow between the sensors (16, 18).

9. A correlator according to any one of the preceding claims, including correlation signal threshold means (36) connected between the wave correlation means (32) and peak lock means (38) for permitting operation of the peak lock means only when the correlation signal rises above a selected level.

10. A correlator according to any one of the preceding claims, wherein the wave correlation means (32) includes an exclusive-OR gate (52) for receiving the delayed and other pulse wave and generating a high output upon correlation therebetween and a low output upon lack of correlation therebetween, and averaging means connected to the exclusive-OR gate for averaging the instances of correlation and non-correlation to generate the correlation signal.

11. A correlator according to any one of the preceding claims, including a digital readout (42) connected to the scaling means (44) for converting the readable signal into a digital display.

12. A correlator according to any one of the preceding claims, wherein the input polarity comparator (24) includes means for generating a square wave corresponding to each of the two noise signals (A, B), the square waves having a high level upon the occurrence of a positive polarity component and a low level upon the occurrence of a negative polarity component, and each square wave corresponding to a respective one of the pulse waves.

13. A method of correlating two noise signals each having positive and negative polarity components, the method comprising:

generating a square wave having a high level upon the occurrence of each positive polarity component for each of the two noise signals (A, B);

variably delaying one of the square waves with respect to the other;

comparing the delayed and undelayed square waves for determining correlation thereof;

generating a correlation signal which is high with high correlation of the delayed and undelayed square waves and low with low correlation of the delayed and undelayed signals;

varying a time delay amount by which the one square wave is delayed in response to the correlation signal; and

determining a particular delay amount corresponding to a maximum correlation signal, which particular delay amount corresponds to correlation between the two noise signals; characterised by:

sweeping the time delay amount in a selected one of increasing and decreasing directions in a predetermined manner; and

detecting decreases in the correlation signal and, upon the occurrence of a decrease in the correlation signal, changing the sweep direction of the variation of the time delay amount so as to increase the correlation signal, whereas, with an increase in the correlation signal, the time delay sweep continues in the selected direction in the predetermined manner.

**Patentansprüche**

1. Korrelationsgerät zum Feststellen einer Korrelation zwischen zwei Rauschsignalen mit Komponenten positiver und negativer Polarität, wobei das Korrelationsgerät (10) aufweist:

einen Eingangspolaritätskomparator (24) für jedes Rauschsignal (A, B), um für jedes Signal eines Pulswelle zu erzeugen, die einen hohen Wert annimmt beim Auftreten einer der entweder positiven oder negativen Polaritätskomponenten und einen niedrigen Wert annimmt beim Auftreten der jeweils anderen der positiven oder negativen Polaritätskomponenten;

eine variable Verzögerungseinrichtung (26), welche angeschlossen ist für die Aufnahme einer der Pulswellen und die Verzögerung dieser Pulswelle um einen veränderbaren Verzögerungswert;

eine Wellenkorrelationseinrichtung (32) für den Empfang der anderen Pulswelle sowie der verzögerten Pulswelle und zum Erzeugen eines Korrelationssignals, welches groß ist, wenn die Korrelation zwischen der verzögerten Pulswelle und der anderen Pulswelle groß ist, und niedrig ist, wenn diese Korrelation gering ist;

Steuermittel (38, 40, 34), welche mit der veränderbaren Verzögerungseinrichtung (26) verbunden sind zum Verändern des Betrages der Verzögerung unter Ansprechen auf das Korrelationssignal; und

eine Skalierungseinrichtung, welche an die Steuermittel (38, 40, 34) angeschlossen ist, um den speziellen Verzögerungswert aufzunehmen und daraus ein ablesbares Signal zu erzeugen; dadurch gekennzeichnet, daß

die Steuermittel (38, 40, 34) eine Ablenkeinrichtung (40, 34) aufweisen zum Verändern des Verzögerungswertes wahlweise in ansteigender oder abfallender Richtung auf vorbestimmte Weise, und Spitzenwert-Haltemittel (38) aufweist, welche mit der Ablenkeinrichtung (40, 34) und der Wellenkorreliereinrichtung (32) verbunden sind, um zu bestimmen, ob das Korrelationssignal ansteigt oder abnimmt und um mit abnehmendem Korrelationssignal die Ablenkeinrichtung zu steuern, so daß sie die Richtung der Veränderung des Verzögerungswertes ändert, so daß ein bestimmter Verzögerungswert, der einem maximalen Korrelationssignal entspricht, erhalten wird, während bei ansteigendem Korrelationssignal die Ablenkeinrichtung fortfährt den Verzögerungswert in der vorbestimmten Weise zu verändern ohne von der Spitzenwert-Halteeinrichtung (38) beeinflußt zu werden.

2. Korrelationsgerät nach Anspruch 1, wobei die Ablenkeinrichtung (40, 34) einen Ablenkspannungsgenerator (40) zum Erzeugen einer sägezahnförmigen Welle mit ansteigenden und abfallenden Flanken aufweist und einen spannungsgesteuerten Oszillator (34) aufweist, der mit dem Ablenkspannungsgenerator (40) verbunden ist für das Erhöhen und Absenken einer Frequenz entsprechend den Flanken der Sägezahnwelle, wobei der spannungsgesteuerte Oszillator (34) mit der veränderbaren Verzögerungseinrichtung (26) verbunden ist, um den Verzögerungswert entsprechend den Veränderungen in der Frequenz des spannungsgesteuerten Oszillators zu verändern.

3. Korrelationsgerät nach Anspruch 2, wobei die veränderbare Verzögerungseinrichtung (26) ein Schieberegister (50) aufweist, welches eine Vielzahl von Stellungen hat, die einer Anzahl von Verzögerungswerten entsprechen, wobei der spannungsgesteuerte Oszillator (34) mit dem Schieberegister (50) für eine Veränderung von dessen Stellung entsprechend den Veränderungen in der Frequenz des spannungsgesteuerten Oszillators (34) verbunden ist.

4. Korrelationsgerät nach Anspruch 1, 2 oder 3, wobei die Ablenkeinrichtung (40, 34) zwei Geschwindigkeiten hat, nämlich eine hohe Geschwindigkeit für schnelle Erhöhungs- und Absenkungsveränderungen des Verzögerungswertes bevor ein maximales Korrelationssignal durch die Spitzenwert-Halteeinrichtung (38) bestimmt worden ist, und eine niedrige Geschwindigkeit, nachdem die Spitzenwert-Halteeinrichtung (38) das maximale Korrelationssignal bestimmt hat.

5. Korrelationsgerät nach einem der vorstehenden Ansprüche, welches erste und zweite Sensoren (16, 18) aufweist, die voneinander beabstandet oder in der Lage sind, in Abstand zueinander gebracht zu werden entlang eines Fließweges eines Fluids, um so die beiden Rauschsignale (A, B) zu erzeugen.

6. Korrelationsgerät nach Anspruch 5, wobei die Sensoren (16, 18) elektrostatische Ladungsmustersensoren für das Abfühlen von Veränderungen der elektrischen Ladung in dem Fluß aufweisen.

7. Korelationsgerät nach Anspruch 5, wobei die Sensoren (16, 18) einen Photodetektor und eine Lichtquelle zum Reflektieren von Licht von dem Fluß und zu dem Potodetektor hin aufweisen, um jedes der beiden Rauschsignale zu erzeugen.

8. Korrelationsgerät nach Anspruch 5, 6 oder 7, wobei die Skaliereinrichtung (44) eine Schaltkreis aufweist zum Umsetzen des speziellen Verzögerungswertes in einen Geschwindigkeitsbetrag, welcher die Flußgeschwindigkeit zwischen den Sensoren (16, 18) wiedergibt.

9. Korrelationsgerät nach einem der vorstehenden Ansprüche, welches eine Schwellwerteinrichtung (36) für das Korrelationssignal aufweist, welche zwischen der Wellenkorrelationseinrichtung (32) und der Spitzenwert-Halteeinrichtung (38) angeschlossen ist, um den Betrieb der Spitzenwert-Halteeinrichtung nur dann zuzulassen, wenn das Korrelationssignal über einen ausgewählten Wert ansteigt.

10. Korrelationsgerät nach einem der vorstehenden Ansprüche, wobei die Wellenkorrelationseinrichtung (32) ein Ausschluß-ODER-Gate (52) aufweist zum Empfang der verzögerten und der anderen Pulswelle und zum Erzeugen eines hohen Ausgangssignals, wenn Korrelation zwischen diesen vorliegt, und eines niedrigen Ausgangssignals, wenn keine Korrelation zwischen diesen vorhanden ist, und eine Mittelungseinrichtung aufweist, welche mit dem Ausschluß-ODER-Gate verbunden ist, um über die Fälle von Korrelation und Nichtkorrelation zu mitteln, um ein Korrelationssignal zu erzeugen.

11. Korrelationsgerät nach einem der vorstehenden Ansprüche, welches eine digitale Auslesseinrichtung (42) aufweist, welche mit der Skaliereinrichtung (44) verbunden ist, um das lesbare Signal in eine Digitalanzeige umzusetzen.

12. Korrelationsgerät nach einem der vorstehenden Ansprüche, wobei der Eingangspolaritätskomparator (24) Mittel aufweist zum Erzeugen einer Rechteckwelle entsprechend jeder der beiden Rauschsignale (A, B), wobei die Rechteckwellen einen hohen Wert haben, wenn die positive Polaritätskomponente auftritt und einen niedrigen Wert, wenn die negative Polaritätskomponente auftritt, und wobei jede Rechteckwelle einer der jeweiligen Pulswellen entspricht.

13. Verfahren zum Korrelieren zweier Rauschsignale, welche jeweils Komponenten positiver und negativer Polarität haben, wobei das Verfahren aufweist:

Erzeugen einer Rechteckwelle, welche beim Auftreten jeder positiven Polaritätskomponente bei jedem der beiden Rauschsignale (A, B) einen hohen Wert hat;

veränderbares Verzögern einer der Rechteckwellen in Bezug auf die andere;

Vergleichen der verzögerten und der unverzögerten Rechteckwellen, um ihre Korrelation zu bestimmen;

Erzeugen eines Korrelationssignals, welches groß ist bei großer Korrelation der verzögerten und der nicht verzögerten Rechteckwellen und niedrig bei niedriger Korrelation der verzögerten und der nicht verzögerten Signale;

Verändern des Betrages der Zeitverzögerung, um welchen die eine Rechteckwelle verzögert ist, unter Ansprechen auf das Korrelationssignal; und

Bestimmen eines speziellen Verzögerungswertes, der einem maximalen Korrelationssignal entspricht, wobei der spezielle Verzögerungswert einer Korrelation der beiden Rauschsignale entspricht;

gekennzeichnet durch:

Ablenken des Zeitverzögerungswertes in einer ausgewählten, entweder zunehmenden oder absenkenden Richtung auf vorbestimmte Weise; und

Erfassen von Abnahmen des Korrelationssignals und Ändern der Ablenkrichtung der Veränderung des Zeitverzögerungswertes beim Auftreten einer Abnahme des Korrelationssignales um so das Korrelationssignal zu erhöhen, während bei einem Anstieg des Korrelationssignales die Ablenkung der Zeitverzögerung in der gewählten Richtung und auf die vorbestimmte Weise fortgeführt wird.

### Revendications

1. Corrélateur en vue d'établir une corrélation de deux signaux de bruit possédant des composantes de polarité positive et négative, corrélateur (10) comportant:

un comparateur de polarité d'entrée (24) pour chaque signal de bruit (A, B) en vue d'engendrer pour chaque signal une onde d'impulsion possédant un niveau élevé lors de l'apparition de l'une des composantes de polarité positive et négative et un niveau bas lors de l'apparition de l'autre des composantes de polarité positive et négative;

des moyens de retard variable (26) reliés pour recevoir une des ondes d'impulsion et retardant cette onde d'impulsion d'une quantité de retard variable;

des moyens de corrélation d'onde (32) en vue de recevoir l'autre des ondes d'impulsion et l'onde d'impulsion retardée et une vue d'engrendrer un signal de corrélation qui est haut avec une corrélation élevée entre l'onde d'impulsion retardée et l'autre onde d'impulsion et bas avec une corrélation faible entre celles-ci;

des moyens de commande (38, 40, 34) reliés aux moyens de retard variable (26) en vue de modifier la quantité de retard en réponse au signal de corrélation; et

des moyens de changement d'échelle (44) reliés aux moyens de commande (38, 40, 34) en vue de recevoir la quantité de retard particulière et d'engendrer un signal lisible à partir de celle-ci;

caractérisé en ce que:

les moyens de commande (38, 40, 34) comportent des moyens de balayage (40, 34) en vue de modifier la quantité de retard dans l'une choisie de directions croissante et décroissante d'une manière prédéterminée et des moyens de verrouillage de crête (38) reliés aux moyens de balayage (40, 34) et aux moyens de corrélation d'onde (32) en vue de déterminer si le signal de corrélation est croissant ou décroissant et, en présence d'un signal de corrélation décroissant, en vue de commander les moyens de balayage pour changer le sens de variation de la quantité de retard de sorte qu'une quantité de retard particulière correspondant à une signal de corrélation maximum est obtenue, tandis que, en présence d'un signal de corrélation croissant, les moyens de balayage continuent à modifier la quantité de retard de la manière prédéterminée sans être influencés par les moyens de verrouillage de crête (38).

2. Corrélateur selon la revendication 1, dans lequel les moyens de balayage (40, 34) comportent un générateur de tension de balayage (40) en vue d'engendrer une onde en dent de scie avec des côtés croissants et décroissants et un oscillateur commandé par tension (34) relié au générateur de tension de balayage (40) en vue d'augmenter et de diminuer une fréquence selon les côtés d'onde en dent de scie, l'oscillateur commandé par tension (34) étant relié aux moyens de retard variable (26) en vue de modifier la quantité de retard conformément à des variations de la fréquence de l'oscillateur commandé par tension.

3. Corrélateur selon la revendication 2, dans lequel les moyens de retard variable (26) comportent un registre à décalage (50) possédant un ensemble de positions correspondant à un nombre de quantités de retard, l'oscillateur commandé par tension (34) étant relié au registre à décalage (50) pour modifier la position de celui-ci conformément à des variations de la fréquence de l'oscillateur commandé par tension (34).

4 Corrélateur selon la revendication 1, la revendication 2 ou la revendication 3, dans lequel les moyens de balayage (40, 34) possèdent deux vitesses, à savoir une vitesse rapide pour des variations croissant et décroissant rapidement de la quantité de retard avant qu'un signal de corrélation maximum soit déterminé par les moyens de verrouillage de crête (38), et une vitesse lente après que les moyens de verouillage de crête (38) aient déterminé le signal de corrélation maximum.

5. Corrélateur selon l'une quelconque des revendications précédentes, comprenant des premier et second capteurs (16, 18) qui sont espacés l'un de l'autre ou pouvant être espacés l'un de l'autre le long d'un trajet d'écoulement d'un fluide en vue d'engendrer les deux signaux de bruit (A, B).

6. Corrélateur selon la revendication 5, dans lequel les capteurs (16, 18) sont constitués par des capteurs de configuration de charge électrostatique en vue de détecter des variations de charge électrostatique dans l'écoulement.

7. Corrélateur selon la revendication 5, dans lequel les capteurs (16, 18) comportent un photodétecteur et une source lumineuse en vue de réfléchir de la lumière à partir de l'écoulement et vers le photodétecteur en vue d'engendrer chacune des deux signaux de bruit.

8. Corrélateur selon la revendication 5, la revendication 6 ou la revendication 7, dans lequel les moyens de changement d'échelle (44) comportent un circuit en vue de convertir la quantité de retard particulière en une quantité de vitesse représentant la vitesse d'écoulement entre les capteurs (16, 18).

9. Corrélateur selon l'une quelconque des revendications précédentes, comprenant des moyens de seuil de signal de corrélation (36) disposés entre les moyens de corrélation d'onde (32) et les moyens de verrouillage de crête (38) en vue de permettre une fonctionnement des moyens de verouillage de crête seulement lorsque le signal de corrélation s'élève au-dessus d'un niveau choisi.

10. Corrélateur selon l'une quelconque des revendications précédentes, dans lequel les moyens de corrélation d'onde (32) comprennent un circuit OU-exclusif (52) pour recevoir l'onde d'impulsion retardée et l'autre onde d'impulsion et engendrer une sortie haute lorse d'une corrélation entre elles et une sortie basse lors d'un manque de corrélation entre elles, et des moyens de calcul de moyenne reliés au circuit OU-exclusif en vue d'effecteur la moyenne des cas de corrélation et de non-corrélation pour engendrer le signal de corrélation.

11. Corrélateur selon l'une quelconque des revendications précédentes, comprenant un organe de restitution numérique (42) relié aux moyens de changement d'échelle (44) pour convenir le signal lisible en un affichage numérique.

12. Corrélateur selon l'une quelconque des revendications précédentes, dans lequel le comparateur de polarité d'entrée (24) comprend des moyens en vue d'engendrer une onde rectangulaire correspondant à chacune des deux signaux de bruit (A, B), les ondes rectangulaires possédant un niveau haut lors de l'apparition d'une composante de polarité positive et un niveau bas lors de l'apparition d'une composante de polarité négative, et chaque onde rectangulaire correspondant à l'une respective des ondes d'impulsion.

13. Procédé de corrélation de deux signaux de bruit possédant chacun des composantes de polarité positive et négative, procédé comportant les opérations consistant à:

engendrer une onde rectangulaire possédant un niveau hauts lors de l'apparition de chaque composante de polarité positive pour chacun des deux signaux de bruit (A, B);

retarder de façon variable une des ondes rectangulaires par rapport à l'autre;

comparer les ondes rectangulaires retardée et non retardée pour déterminer leur corrélation;

engendrer un signal de corrélation qui est haut avec une corrélation élevée des ondes rectangulaires retardée et non retardée et bas avec une corrélation faible des signaux retardé et non retardé;

modifier une quantité de retard de temps dont une onde rectangulaire est retardée en réponse au signal de corrélation; et

déterminer une quantité de retard particulière correspondant à une signal de corrélation maximum, quantité de retard particulière correspondant à une corrélation entre les deux signaux de bruit; caractérisé par:

le balayage de la quantité de retard de temps dans l'une choisie de directions croissante et décroissante d'une manière prédéterminée; et

la détection de diminutions dans le signal de corrélation et, après l'apparition d'une diminution dans le signal de corrélation, la modification du sens de balayage de la variation de la quantité de retard de temps de façon à augmenter le signal de corrélation, tandis que, avec un acroissement du signal de corrélation, le balayage de retard de temps continue dans la direction choisie de la manière prédéterminée.

FIG. 1

FIG. 2

FIG. 3A

POLARITY COMPARATOR | VARIABLE DELAY | CORRELATION FUNCTION DETERMINATION | CORRELATION FUNCTION THRESHOLD

EP 0 097 041 B1

VOLTAGE - CONTROLLED OSCILLATOR

FIG. 3D

TO FIG. 3E

SCALE FACTOR

8 POS. DIP SWITCH

TO FIG. 3A

SWEEP VOLTAGE GENERATOR

FROM FIG. 3A

FIG. 3B

FROM FIG. 3C

EP 0 097 041 B1

FIG. 3C

EP 0 097 041 B1

FIG. 3E

EP 0 097 041 B1